Europäisches Patentamt

European Patent Office

Office européen des brevets

(11) Numéro de publication : **0 424 392 B1**

(12) **FASCICULE DE BREVET EUROPEEN**

(45) Date de publication du fascicule du brevet :
22.07.92 Bulletin 92/30

(51) Int. Cl.⁵ : **B62D 59/02**

(21) Numéro de dépôt : **89904503.3**

(22) Date de dépôt : **11.04.89**

(86) Numéro de dépôt international :
**PCT/BE89/00014**

(87) Numéro de publication internationale :
**WO 89/09717 19.10.89 Gazette 89/25**

(54) PROCEDE ET DISPOSITIF DE REGULATION DU COUPLE MOTEUR TRANSMIS PAR UN TRACTEUR A UNE SEMI-REMORQUE A ENTRAINEMENT HYDRAULIQUE.

(30) Priorité : **12.04.88 BE 8800409**

(43) Date de publication de la demande :
**02.05.91 Bulletin 91/18**

(45) Mention de la délivrance du brevet :
**22.07.92 Bulletin 92/30**

(84) Etats contractants désignés :
**AT BE CH DE FR GB IT LI LU NL SE**

(56) Documents cités :
**EP-A- 0 054 500
CH-A- 394 822
CH-A- 394 829**

(73) Titulaire : **NOERENS, Willy, Joseph
396, chaussée de Bruxelles
B-7498 Hennuyères (BE)**

(72) Inventeur : **NOERENS, Willy, Joseph
396, chaussée de Bruxelles
B-7498 Hennuyères (BE)**

(74) Mandataire : **Kuborn, Jacques et al
Office Hanssens S.P.R.L. Square
Marie-Louise, 40 (bte 19)
B-1040 Bruxelles (BE)**

Jouve, 18, rue Saint-Denis, 75001 PARIS

## Description

Procédé et dispositif de régulation du couple moteur transmis par un tracteur à une semi-remorque à entraînement hydraulique.

La présente invention concerne un procédé et un dispositif de régulation du couple moteur de la semi-remorque d'un véhicule dont la semi-remorque possède des essieux moteurs à entraînement hydraulique.

Bien qu'elle ne soit pas limitée à cette application particulière, elle s'applique particulièrement bien à des véhicules destinés à circuler sur des terrains difficiles tels que chantiers, terrains sableux et analogues.

Le problème que l'invention vise à résoudre, dans un véhicule de ce type, est essentiellement de répartir l'effort moteur entre le tracteur et sa semi-remorque, pour en faire un véhicule tout-terrain possédant des roues motrices aussi bien sur la semi-remorque que sur le tracteur (et de préférence dont toutes les roues sont motrices), pour éviter que le véhicule ne s'ensable, ne s'embourbe, ou analogue, par patinage complet du tracteur suite à une trop faible poussée de la semi-remorque, et qu'il ne se mette en travers suite à une trop forte poussée de la semi-remorque.

L'invention s'applique en particulier à un véhicule équipé d'un système moteur en soi connu, comprenant essentiellement le moteur du tracteur entraînant, par l'intermédiaire d'une boîte de vitesses, d'une part ses propres roues motrices et d'autre part une pompe alimentant un moteur hydraulique sur la semi-remorque, ce dernier moteur entraînant alors les roues motrices de la semi-remorque.

Un tel système est connu, par exemple par le document EP-A-O 054 500, qui se propose de résoudre le problème de la motricité de la semi-remorque par un système hydrostatique assurant la transmission entre la prise de mouvement du moteur thermique du tracteur et l'essieu correspondant de la semi-remorque.

Le système hydrostatique suivant EP-A-O 054 500 comporte une pompe hydraulique à débit variable, reliée à la prise de mouvement du tracteur, et un moteur hydraulique monté sur la semi-remorque, alimenté par la pompe hydraulique et relié à une boîte de transfert réductrice accouplée à un pont de la semi-remorque, la pompe hydraulique pouvant être bloquée dans l'une ou l'autre de deux cylindrées distinctes correspondants dans un sens à la marche avant du véhicule, et dans l'autre à la marche arrière du véhicule.

Comme l'enseigne EP-A-O 054 500, la motricité de la semi-remorque doit être parfaitement synchronisée en marche avant et en marche arrière avec le tracteur, pour obtenir une réelle efficacité dans l'adhérence au sol, et l'on prévoit dès lors dans ce document de synchroniser les vitesses du tracteur et de la semi-remorque, pour au moins un rapport de la boîte de vitesses en marche avant, et un rapport en marche arrière.

Cette synchronisation selon EP-A-O 054 500 est obtenue en calculant - pour le ou les rapports de boîte choisis, pour lesquels on veut assurer la motricité de la semi-remorque - le rapport de cylindrée de la pompe et du moteur hydrauliques, et en ajustant la cylindrée de l'une des machines, de manière discontinue, sous la commande du levier de vitesses de la boîte de vitesses du tracteur, pour amener ce rapport à la valeur calculée.

Selon EP-A-O 054 500, cette synchronisation entraîne une pression nulle dans le circuit hydraulique, et donc une motricité nulle de la semi-remorque, pour une adhérence normale, et on prévoit encore de modifier légèrement la cylindrée calculée pour assurer la synchronisation, de manière à assurer dans le circuit une pression permanente, augmentant ainsi la motricité de la semi-remorque.

Selon cet état de la technique, il est donc connu d'assurer la motricité d'une semi-remorque au moyen d'un système hydraulique dont la pompe est actionnée par le moteur thermique du tracteur, et de faire varier de manière discontinue et prédéfinie la cylindrée de la pompe et/ou du moteur hydrauliques, sous la commande du levier de vitesses de la boîte de vitesses du tracteur.

Un tel système d'entraînement, convenablement calculé en particulier en ce qui concerne la répartition de l'effort moteur entre le tracteur et la semi-remorque, fonctionne bien lorsque le véhicule roule en ligne droite, et que les roues motrices présentent toutes la même adhérence et roulent donc à la même vitesse.

En courbe, le tracteur parcourt un trajet de plus grand rayon que celui parcouru par la semi-remorque et, sans dispositif de régulation, le moteur hydraulique - dont la vitesse est liée mécaniquement à la vitesse moyenne des roues motrices de la semi-remorque - tend à ralentir et à faire monter la pression dans le circuit.

En tout-terrain, d'autre part, le véhicule rencontre des conditions d'adhérence variables. Ainsi, deux situations sont possibles en fonction de la perte d'adhérence, qui se produit soit sur le tracteur, soit sur la semi-remorque. En l'absence de toute correction appliquée au système, un début de patinage du tracteur tend à faire augmenter le débit de la pompe - dont la vitesse est liée mécaniquement à la vitesse moyenne des roues motrices du tracteur - et donc la pression dans le circuit hydraulique. De ce fait, le couple transmis aux roues motrices de la semi-remorque par le moteur hydraulique augmente également, puisque le moteur hydraulique - dont la vitesse est liée mécaniquement à la vitesse moyenne des roues motrices de la semi-remorque - s'oppose à cette augmentation de débit. Si elle n'est pas corrigée, cette augmentation du couple finit par entraîner soit un patinage des roues motrices de la semi-remorque, si l'adhérence est insuffisante, soit un risque de mise en travers du tracteur, sous l'effet d'une poussée trop importante de la semi-remorque.

Par contre, et toujours pour les mêmes raisons, un début de patinage de la semi-remorque tend à faire baisser la pression dans le circuit, et donc le couple moteur de la semi-remorque. En l'absence d'une correction, on perd donc ici au moins une grande partie, éventuellement tout le bénéfice d'une motorisation de la semi-remorque.

Selon l'invention, on se propose de résoudre ces problèmes en fournissant un procédé et un dispositif de régulation du couple moteur transmis à la semi-remorque, dans lesquels on agit sur la cylindrée de la pompe ou la cylindrée du moteur, dans le sens voulu pour contrecarrer la variation de la pression. Il peut être utile de noter ici que la variation de la cylindrée doit bien sûr se faire dans un sens opposé - pour une même correction - suivant que l'on agit sur la pompe ou sur le moteur.

Un but de l'invention est donc de fournir un procédé de régulation du couple moteur transmis à la semi-remorque d'un véhicule dans lequel le moteur du tracteur actionne d'une part les roues motrices du tracteur, par l'intermédiaire d'une boîte de vitesses et d'autre part, par l'intermédiaire d'une prise de force, une pompe hydraulique alimentant, par un circuit hydraulique, au moins un moteur hydraulique sur la semi-remorque, entraînant les roues motrices de la semi-remorque, la vitesse de rotation de la pompe étant liée à la vitesse de rotation des roues du tracteur, et la vitesse de rotation du moteur étant liée à la vitesse de rotation des roues de la semi-remorque, procédé dans lequel la régulation du couple s'obtient en agissant sur la cylindrée de la pompe et/ou du moteur hydraulique, ledit procédé consistant à

– établir, dans le circuit hydraulique reliant le moteur à la pompe, entre l'entrée et la sortie de l'une au moins des machines hydrauliques (14, 16) (pompe ou moteur), un circuit de dérivation (122, 123) destiné à permettre un glissement entre la vitesse du moteur et la vitesse de la pompe,

– constituer dans le circuit de dérivation une perte de charge (124, 125) telle qu'une variation du glissement, entraînant une variation du débit dérivé par ledit circuit de dérivation, s'accompagne d'une variation sensible de la pression du côté haute pression du circuit hydraulique,

– déterminer le glissement entre la vitesse ($V_m$) du moteur et la vitesse ($V_p$) de la pompe, par rapport à une valeur de consigne, et simultanément

– surveiller la pression du côté haute pression du circuit hydraulique et, lorsque la pression sort d'un intervalle prédéterminé,

– agir sur la cylindrée de l'une au moins des machines (pompe ou moteur) hydrauliques, pour ramener le glissement vers zéro.

Selon une autre caractéristique du procédé de l'invention, il consiste à déterminer le glissement par la différence ($k - V_p/V_m$) entre une valeur prédéterminée ($k$) et la valeur instantanée ($V_p/V_m$) du rapport entre la vitesse de la pompe et la vitesse du moteur.

Selon une autre caractéristique, le procédé consiste à agir sur la cylindrée de l'une des machines hydrauliques par un signal de correction proportionnel à ladite différence ($k - V_p/V_m$) entre la valeur prédéterminée et la valeur actuelle du rapport des vitesses $V_p/V_m$.

Selon une autre caractéristique, le procédé consiste de plus à définir, pour le côté haute pression du circuit pompe-moteur hydraulique, d'une part une pression maximale $P_{max}$ correspondant à l'effort moteur maximum souhaité sur la semi-remorque, et d'autre part une pression minimale $P_{appui}$ correspondant à l'effort moteur minimum souhaité sur la semi-remorque, et à définir ledit intervalle de pression prédéterminé, par l'intervalle de pression entre la pression $P_{max}$ et la pression $P_{appui}$.

Selon une autre caractéristique, le procédé consiste de plus à mesurer la charge sur la semi-remorque et à définir $P_{max}$ en fonction de cette charge.

Selon une autre caractéristique du procédé, les circuits de fuite des machines et du circuit hydrauliques sont utilisés comme circuit de dérivation, et les pertes de charge dans ces circuits de fuite sont utilisées pour établir la relation voulue entre la pression et le débit dérivé, ou le glissement.

Selon une autre caractéristique, le procédé consiste à suppléer les circuits de fuite par un vrai circuit de dérivation, présentant une perte de charge prédéterminée, pour établir la relation voulue entre la pression et le débit dérivé, ou le glissement.

Selon une autre caractéristique, le procédé consiste à faire varier la cylindrée de la pompe à cylindrée variable, la cylindrée du moteur étant maintenue constante.

Selon une autre caractéristique, le procédé consiste à faire varier la cylindrée du moteur à cylindrée variable, la cylindrée de la pompe étant maintenue constante.

Selon une autre caractéristique, le procédé consiste à faire varier en sens inverse la cylindrée de la pompe et celle du moteur.

Un autre but de l'invention est de fournir un dispositif pour la mise en oeuvre du procédé, comprenant un tracteur possédant un moteur thermique pour entraîner les roues du tracteur, par l'intermédiaire d'une boîte de vitesses, et une pompe hydraulique par l'intermédiaire d'une prise de force et une semi-remorque, reliée au tracteur, possédant au moins un moteur hydraulique relié à la pompe hydraulique par l'intermédiaire d'un circuit hydraulique, pour entraîner les roues de la semi-remorque, dispositif caractérisé en ce qu'il comprend de plus

un circuit de dérivation dans le circuit hydraulique, entre l'entrée et la sortie de l'une au moins des machines hydrauliques (pompe ou moteur), qui permet un glissement contrôlé par la pression, entre la vitesse du moteur hydraulique et la vitesse de la pompe hydraulique;

un circuit de commande;

une première ligne pour signaux, reliant la pompe au circuit de commande pour transmettre un signal $(V_p)$ représentatif de la vitesse de rotation de la pompe;

une deuxième ligne pour signaux, reliant la pompe au circuit de commande pour transmettre un signal (P) représentatif de la pression de sortie de la pompe;

une troisième ligne pour signaux, reliant le moteur hydraulique au circuit de commande pour transmettre un signal $(V_M)$ représentatif de la vitesse de rotation du moteur;

une ligne de sortie pour signaux reliant le circuit de commande à la pompe, pour transmettre un signal de commande de la capacité de la pompe;

dans lequel le circuit de commande reçoit des signaux des lignes pour signaux, et produit un signal de commande de la capacité de la pompe, transmis par la ligne de sortie lorsque la pression de sortie de la pompe se situe en dehors d'un intervalle prédéterminé.

Un autre but de l'invention est de fournir un dispositif pour la mise en oeuvre du procédé, comprenant un tracteur possédant un moteur thermique pour entraîner les roues du tracteur, par l'intermédiaire d'une boîte de vitesses, et une pompe hydraulique par l'intermédiaire d'une prise de force; et une semi-remorque, reliée au tracteur, possédant au moins un moteur hydraulique relié à la pompe hydraulique par l'intermédiaire d'un circuit hydraulique, pour entraîner les roues de la semi-remorque, dispositif caractérisé en ce qu'il comprend de plus

un circuit de dérivation dans le circuit hydraulique, entre l'entrée et la sortie de l'une au moins des machines hydrauliques (pompe ou moteur), qui permet un glissement contrôlé par la pression, entre la vitesse du moteur hydraulique et la vitesse de la pompe hydraulique;

un circuit de commande;

une première ligne pour signaux, reliant la pompe au circuit de commande pour transmettre un signal $(V_p)$ représentatif de la vitesse de rotation de la pompe;

une deuxième ligne pour signaux, reliant la pompe au circuit de commande pour transmettre un signal (P) représentatif de la pression de sortie de la pompe;

une troisième ligne pour signaux, reliant le moteur hydraulique au circuit de commande pour transmettre un signal $(V_M)$ représentatif de la vitesse de rotation du moteur;

une ligne de sortie pour signaux, reliant le circuit de commande au moteur, pour transmettre un signal de commande de la capacité du moteur;

dans lequel le circuit de commande reçoit des signaux des lignes pour signaux, et produit un signal de commande de la capacité du moteur, transmis par la ligne de sortie lorsque la pression de sortie de la pompe se situe en dehors d'un intervalle prédéterminé.

Selon une autre caractéristique, le dispositif comprend une quatrième ligne pour signaux, reliant la semi-remorque au circuit de commande pour transmettre un signal représentatif de la charge de la semi-remorque.

Selon une autre caractéristique, le circuit de dérivation comprend un organe créant une perte de charge telle qu'une variation du débit passant par le circuit de dérivation s'accompagne d'une variation sensible de la pression du côté haute pression du circuit hydraulique.

Selon une autre caractéristique, le circuit de commande est relié par une ligne de sortie à la pompe et au moteur hydrauliques, et commande en sens inverse la capacité de la pompe et la capacité du moteur, lorsque la pression de sortie de la pompe se situe en dehors de l'intervalle prédéterminé.

D'autres aspects, caractéristiques et avantages de l'invention apparaîtront de la description et des dessins annexés, sur lesquels:

La figure 1 est une vue schématique d'un système de motorisation d'un véhicule, à entraînement hydraulique de la remorque,

La figure 2 est un schéma simplifié du circuit hydraulique entre la pompe et le moteur hydraulique, et du système de contrôle associé,

La figure 3 est un schéma-bloc d'un circuit de contrôle utilisable dans le procédé de l'invention, et

La figure 4 est un schéma de l'évolution de la pression dans le circuit hydraulique au cours du temps, en fonction des conditions de circulation du véhicule, et

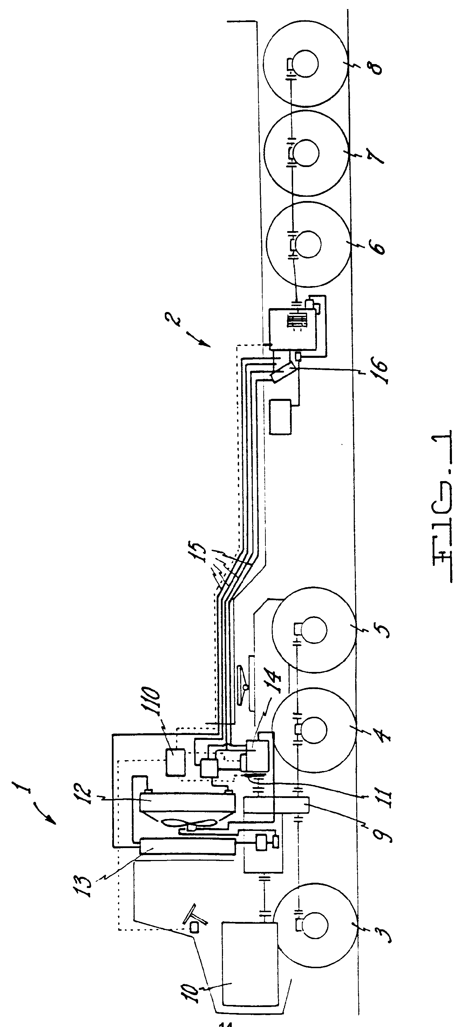

En se reportant à la figure 1, le véhicule comprend un tracteur 1 et une semi-remorque 2; tous les essieux 3, 4 et 5 du tracteur sont moteurs, de même que tous les essieux 6, 7 et 8 de la semi-remorque.

Les essieux du tracteur sont entraînés mécaniquement de manière connue, par l'intermédiaire de différentiels, par la boîte de vitesses 9 du moteur thermique 10 du tracteur.

Une prise de force 11 à la sortie de la boîte de vitesses 9 du tracteur entraîne d'autre part une pompe 14 montée sur le tracteur et branchée dans un circuit hydraulique comprenant des conduites 15 alimentant un moteur hydraulique 16 sur la semi-remorque. Ce dernier moteur hydraulique entraîne alors, par l'intermédiaire d'une transmission mécanique, les essieux moteurs 6, 7 et 8 de la semi-remorque.

Ce type de motorisation est connu dans la technique, et le problème que se propose de résoudre l'invention est celui de l'adaptation automatique de l'effort d'entraînement fourni par le système hydraulique, en fonction des conditions instantanées de circulation du véhicule, à savoir ralentissement de la semi-remorque par suite d'un trajet en courbe, début de patinage du tracteur ou début de patinage de la semi-remorque, cette adaptation étant obtenue, dans le mode de réalisation décrit, en agissant sur la cylindrée de la pompe 14 à cylindrée variable.

Le circuit hydraulique comprend bien sûr les accessoires voulus, classiques, comme un réservoir d'huile 13, un radiateur 12 de refroidissement de l'huile, et analogues.

Selon l'invention, et comme on l'a mentionné, la régulation du couple moteur de la semi-remorque s'obtient indifféremment par adaptation de la cylindrée de la pompe ou de la cylindrée du moteur, sur base d'un paramètre de fonctionnement du système hydraulique qui est essentiellement le glissement entre la vitesse de rotation de la pompe et celle du moteur hydraulique, ou variation du rapport entre ces vitesses, et de la pression du fluide hydraulique, ce paramètre étant fourni - lorsque la pression du fluide hydraulique dans la partie haute pression du circuit se situe en dehors d'un intervalle prédéterminé - à un circuit de commande qui agit en retour sur un servo-mécanisme de réglage de la cylindrée de la machine hydraulique - pompe ou moteur - à cylindrée variable.

Dans ce qui suit, et pour la simplicité de la description, on considèrera cependant uniquement le cas d'une pompe à cylindrée variable, cette description s'appliquant mutatis mutandis au cas du moteur à cylindrée variable.

Il n'est également pas exclu selon l'invention d'agir à la fois, et en sens contraire, sur la cylindrée de la pompe et celle du moteur, bien que cela ne présente à priori aucun avantage particulier, tout en compliquant le système.

L'invention sera mieux comprise en liaison avec le schéma de la Figure 2, dans lequel le circuit hydraulique est schématisé par la pompe 14 alimentant le moteur 16 par une conduite de pression (côté haute pression) 120 et une conduite de retour 121, et comprenant des dérivations 122, 123 autour de la pompe et du moteur, dérivations comprenant des vannes d'étranglements 124 et 125.

Les dérivations 122 et 123 sont destinées à représenter au moins les circuits de fuite, ou pertes du système hydraulique, et en particulier de la pompe et du moteur, bien que ces pertes se produisent en pratique vers l'atmosphère, et non entre le côté haute pression et le côté retour du circuit. Les pertes de charge correspondantes sont schématisées par les vannes d'étranglement 124 et 125.

Dans un tel circuit schématique, tout comme dans un circuit hydraulique réel, compte tenu des circuits de fuite mentionnés ci-dessus, qui prélèvent du fluide dans la partie haute pression, le débit théorique du fluide hydraulique consommé par le moteur sera normalement inférieur du débit théorique de la pompe, destiné au moteur, la différence étant fonction de l'effort plus ou moins grand demandé au moteur hydraulique.

Par "débit théorique", on entend ici le débit obtenu par calcul, en faisant le produit de la vitesse de rotation par la cylindrée de la machine hydraulique concernée, donc sans tenir compte des pertes.

Dans des conditions de fonctionnement normales, la vitesse ($V_P$) de la pompe et celle ($V_M$) du moteur hydraulique sont proportionnelles, soit $V_P = kV_M$, puisque le tracteur et sa semi-remorque se déplacent à la même vitesse, et le facteur de proportionnalité k est déterminé par les caractéristiques des transmissions entre le moteur thermique, les essieux moteurs du tracteur et la pompe, d'une part, et entre le moteur hydraulique et les essieux moteurs de la semi-remorque, d'autre part.

Par "conditions de fonctionnement normales", on entend ici les conditions dans lesquelles les roues du tracteur et de la semi-remorques roulent à la même vitesse, c'est-à-dire lorsque le véhicule se déplace en ligne droite, et qu'il n'y a aucun patinage des roues, ni du tracteur ni de la semi-remorque.

Dans ces conditions de fonctionnement normales, il s'établit dans le système hydraulique une pression qui est essentiellement indépendante de la charge variable sur le moteur thermique (par exemple en fonction de la vitesse du véhicule, et de l'inclinaison du sol sur lequel il se déplace), et ne dépend donc essentiellement que du rapport entre la cylindrée de la pompe et la cylindrée du moteur hydraulique, compte tenu des caractéristiques de pertes de charge du système, puisque le facteur de proportionnalité k entre la vitesse de la pompe et celle du moteur est déterminé par les caractéristiques des transmissions.

Selon l'invention, c'est cette caractéristique de proportionnalité des vitesses qui est utilisée pour la commande de la régulation. En effet, on détecte tout écart entre d'une part le rapport $V_P/V_M$ des vitesses instantanées de la pompe et du moteur, et d'autre part leur rapport prédéfini k et, lorsque cet écart entraîne une variation de la pression - et donc du couple moteur sur la semi-remorque - au-delà de limites prédéterminées, on agit sur la cylindrée, dans le sens voulu pour ramener la pression dans les limites prédéterminées.

La semi-remorque assure donc dans les conditions normales un effort moteur essentiellement constant, préchoisi en fonction par exemple du type du véhicule.

Dès lors, les essieux moteurs du tracteur doivent reprendre seuls tous le supplément de charge sur le moteur thermique, lorsque celle-ci augmente.

Il arrive alors un moment où, suite à une légère perte d'adhérence, ou encore simplement parce que l'effort demandé devient trop important, les roues motrices du tracteur glissent ou patinent, même faiblement; la vitesse de la pompe, liée à la vitesse moyenne des roues motrices du tracteur, augmente de même, tandis que la vitesse du moteur hydraulique, liée à la vitesse moyenne des roues motrices de la remorque et donc à la vitesse d'avancement réelle du véhicule, ne change pas. Le débit de la pompe augmente donc sans augmentation correspondante de la consommation du moteur et il s'établit dans le circuit une nouvelle pression l'équilibre, supérieure à la précédente, pour laquelle les pertes ou circuits de fuite du circuit absorbent cette différence de débit.

A cet égard, si le débit des circuits de fuite s'avérait insuffisant pour ce but, il pourrait être complété par une ou des dérivations vraies dans le circuit.

Le moteur hydraulique étant alimenté à une pression plus élevée, il fournit un couple plus important qui fait que la semi-remorque participe plus à l'effort moteur du véhicule, et tend donc à faire cesser le patinage du tracteur et à faire revenir le véhicule dans les "conditions normales" de départ.

Ce couple doit toutefois être maintenu dans des limites déterminées, de préférence fonction de la charge de la semi-remorque, et c'est ici qu'intervient la régulation de la pression régnant dans la partie haute pression du circuit hydraulique, par modification de la cylindrée de la machine hydraulique dans le sens déterminé par l'écart du rapport $V_p/V_m$ des vitesses vis-à-vis du rapport k prédéfini, jusqu'à ce que la pression - et donc le couple - reviennent dans les limites prédéterminées.

On a encore schématisé en 132 à la Figure 2 un circuit de sécurité renvoyant le fluide hydraulique directement, par exemple au réservoir, lorsque la pression dépasse la pression maximum admissible.

A la Figure 2, on a représenté par des traits d'axe les liaisons électriques entre les sondes de mesure des divers paramètres et le circuit de commande 110.

Ainsi, la ligne 126 conduit au circuit 110 un signal ($V_P$) proportionnel à la vitesse de rotation de la pompe, tandis que la ligne 128 conduit au circuit 110 un signal (P) proportionnel à la pression de sortie de la pompe.

Le circuit 110 reçoit encore par la ligne 129 un signal ($V_M$) proportionnel à la vitesse de rotation du moteur hydraulique, et par une ligne 130 un signal (P) proportionnel à la charge sur la semi-remorque.

Il agit d'autre part sur la cylindrée de la pompe par un signal dans la ligne 131.

Le signal de vitesse $V_P$ fourni par la ligne 126 est proportionnel à la vitesse de rotation de la pompe 14, et donc la vitesse de rotation moyenne des roues motrices du tracteur.

De même, le signal dans la ligne 129 est proportionnel à la vitesse $V_M$ de rotation du moteur hydraulique, et donc à la vitesse de rotation moyenne des roues motrices de la semi-remorque.

Selon un mode de réalisation préféré, on définit au départ, et pour un véhicule donné, une première valeur de consigne pour la cylindrée de la pompe du système hydraulique pour que, dans les conditions de fonctionnement normales, il s'établisse dans le système hydraulique une première pression, ou pression "d'appui" assurant simplement une participation réduite de la semi-remorque à l'effort moteur, par exemple juste suffisante pour compenser les frottements de roulement de la semi-remorque.

On définit d'autre part également une pression maximale au-delà de laquelle il faut réduire la cylindrée de la pompe pour éviter une trop forte poussée de la semi-remorque, compte tenu des caractéristiques de celle-ci, et de son tracteur.

Cette pression maximale sera de préférence fonction de la charge sur la semi-remorque.

Le fonctionnement du système, basé comme on l'a dit plus haut sur la détection d'un glissement, ou écart du rapport des vitesses vis-à-vis d'un rapport prédéfini, est le suivant.

En supposant que le véhicule roule en ligne droite, sur terrain ferme, la pression dans le circuit hydraulique s'établit en substance à la première pression ou pression d'appui $P_{appui}$.

Si maintenant le véhicule se place en courbe, la semi-remorque suit un trajet moins long, et se déplace donc moins vite que le tracteur. La vitesse du moteur hydraulique diminue par rapport à celle de la pompe, qui reste inchangée, et la pression monte dans le circuit.

Dès que la pression $P_{max}$ est atteinte, le circuit 110 envoie au servomécanisme de réglage de la cylindrée de la pompe, par la ligne 131, un signal de correction de la cylindrée de la pompe, de même signe que la grandeur de l'écart (k - $V_P/V_M$), de façon à contrecarrer la variation de pression dans le circuit.

Le cas dans lequel le tracteur commence à patiner entraîne un fonctionnement identique, puisque dans ce cas également, le rapport $V_P/V_M$ augmente, suite cette fois à l'augmentation de la vitesse de la pompe, la vitesse du moteur hydraulique restant constante.

Envisageons enfin le cas d'un patinage de la remorque.

Ici, c'est la vitesse du moteur hydraulique qui augmente, tandis que la vitesse de la pompe reste constante; le rapport $V_P/V_M$ diminue, et la pression baisse; le sens de la différence k - $V_P/V_M$ change, et donc le sens du signal de correction de la cylindrée engendré par le circuit de contrôle 110. De manière analogue au cas de l'augmentation de la pression, le signal de correction n'est ici effectivement envoyé au servomécanisme de réglage de la cylindrée de la pompe que lorsque la pression descend en dessous de la

pression minimale $P_{appui}$.

En ce reportant à la figure 3, on y a représenté schématiquement un mode de réalisation du circuit de contrôle 110 de la figure 2.

Ce circuit reçoit du système: par la ligne 126 un signal $V_P$ proportionnel à la vitesse de rotation de la pompe; par la ligne 129 un signal $V_m$ proportionnel à la vitesse de rotation du moteur; par la ligne 130 un signal p proportionnel à la charge sur la semi-remorque, et par la ligne 128 un signal P proportionnel à la pression du côté haute pression du circuit hydraulique.

Une première partie du circuit sert à produire un signal de correction, comme ci-dessous.

Le circuit 200 calcule, à partir des signaux de vitesse instantanée, $V_p$ et $V_m$, le rapport instantané $V_p/V_m$, et un signal proportionnel à ce rapport est envoyé par la ligne 210 au circuit 220 qui reçoit également, par une ligne 230, un signal proportionnel au rapport k prédéfini entre les vitesses $V_p$ et $V_m$, et envoie par la ligne 240 un signal proportionnel à (k - $V_p/V_m$) à un élément de commutation 250 dont la sortie est reliée par une ligne 260 à un servomoteur 270 agissant sur le réglage de la cylindrée de la machine hydraulique concernée, soit la pompe 14 dans l'exemple de la figure 2.

Une deuxième partie du circuit sert à déterminer quand le signal de correction doit ou non être envoyé au servomoteur de la machine hydraulique concernée.

En effet, comme on l'a déjà mentionné, le signal de correction calculé en permanence - n'est envoyé à la machine concernée que lorsque la pression du côté haute pression du système devient respectivement trop élevée (poussée trop forte de la semi-remorque), ou trop faible (poussée insuffisante de la semi-remorque). A ce sujet, il est encore utile de remarquer ici que la limite inférieure de la pression est normalement moins importante que sa limite supérieure; en effet, une pression excessive entraîne, en plus d'une poussée excessive de la semi-remorque, et donc d'un risque de patinage de celle-ci, ou de mise en travers du tracteur, un risque de rupture du circuit (ou plutôt un risque d'actionnement des soupapes de sécurité), tandis qu'une poussée momentanée trop faible ou nulle de la semi-remorque fait bien sûr momentanément perdre le bénéfice de sa motorisation, mais n'entraîne pas de conséquence dommageable pour le système.

Cette deuxième partie du circuit comprend un bloc 280 qui reçoit, par la ligne 130, un signal p proportionnel à la charge sur la semi-remorque et, en fonction d'une relation $P_{max} = f(p)$ prédéfinie en fonction par exemple du type de véhicule, délivre à sa sortie, dans la ligne 290, un signal proportionnel à la pression maximum $P_{max}$ ajustée en fonction de ladite charge.

Bien que ce ne soit pas représenté au dessin, parce que son importance pratique est moindre, il est bien sûr également possible de prévoir un ajustement de la pression minimum $P_{appui}$ en fonction de la charge de la semi-remorque.

Un signal P proportionnel à la pression instantanée dans la partie haute pression du circuit est d'autre part fourni au circuit de contrôle par la ligne 128, et alimente par une ligne 310 une entrée d'un circuit logique 300 qui reçoit également le signal $P_{max}$ de la ligne 290 et, en fonction du sens de la différence (P - $P_{max}$), fournit un signal 0 ou 1 dans la ligne 320.

Ce même signal P alimente également, par la ligne 330, un circuit logique 340, analogue au circuit 300, qui reçoit également le signal de consigne $P_{appui}$ prédéfini, par la ligne 350 et en fonction du sens de la différence (P - $P_{appui}$), fournit un signal 0 ou 1 dans la ligne 320.

Le signal dans la ligne 320 sera 0 lorsque la pression P se trouvera dans l'intervalle $P_{max} \leq P \leq P_{appui}$, et 1 lorsque P se trouvera à l'extérieur de cet intervalle.

Ce signal dans la ligne 320 alimente l'entrée porte ou de commutation du commutateur 250, celui-ci étant mis dans l'état bloquant lorsque son entrée porte vaut 0, et passant lorsque son entrée porte vaut 1. Lorsqu'il est passant, le commutateur 250 conduit le signal de correction, par la ligne 260, au servomoteur 270 qui agit sur la machine hydraulique concernée, tandis qu'il bloque ce signal, et donc la correction, lorsqu'il est dans l'état bloqué.

On assure ainsi, en l'absence de correction et dans un intervalle de pression prédéfini, une adaptation automatique de l'effort de poussée de la semi-remorque à l'effort demandé au tracteur - mesuré par sa tendance à patiner - l'action de correction n'étant appliquée que dans la zone des pressions jugées trop élevées ou trop faibles.

Dans la description qui précède, on n'a envisagé que le cas d'un seul moteur hydraulique sur la semi-remorque, entraînant les roues par l'intermédiaire d'une transmission mécanique. Là où cela peut s'avérer utile, il rentre bien entendu aussi dans le cadre de l'invention de prévoir plusieurs moteurs hydrauliques sur la semi-remorque, entraînant par exemple chacun un essieu moteur, et alimenté par une pompe hydraulique.

Les pompes hydrauliques à cylindrée variable et leur processus de commande sont connus, et ne doivent pas être décrits plus en détail.

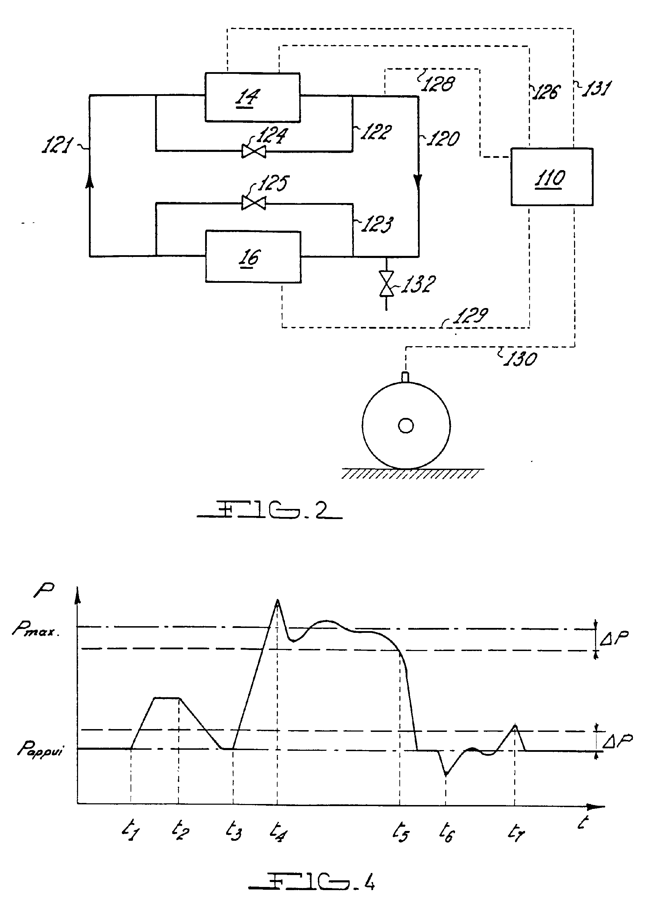

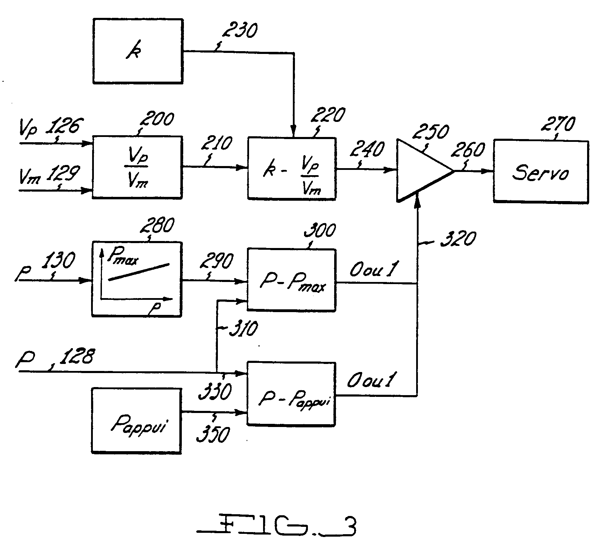

En ce reportant maintenant à la figure 4, on y a représenté schématiquement l'évolution de la pression dans le circuit, au cours du temps, en fonction des différentes conditions de circulation du véhicule et des corrections de cylindrée effectuées sur la pompe.

Dans le cas de la figure 4 on a considéré, en plus de ce qui a été décrit précédemment, que le circuit de contrôle était conçu - en vue d'assurer une meilleure stabilité du système - pour que la correction, une fois activée dès que la pression est sortie de l'intervalle $P_{max} \leq P \leq P_{appui}$, le reste jusqu'à ce que la pression revienne à une valeur inférieure à $P_{max}$ - $\Delta P$ ou supérieure à $P_{appui}$ + $\Delta P$, $\Delta P$ étant défini en fonction du temps de réponse du système.

La pression s'établit au départ très rapidement à la pression choisie $P_{appui}$. Au cours du laps de temps $0 - t_1$, la pression reste constante, soit que le véhicule circule dans des conditions normales telles que définies ici, dans lesquelles le tracteur seul reprend en substance tous les suppléments d'effort moteur imposés par exemple par une accélération du véhicule, une côte, etc.

Au cours du laps de temps $t_1 - t_2$, la pression monte dans le système, puis se stabilise. Ceci signifie que le véhicule rencontre des conditions de roulement moins bonnes, dans lesquelles l'effort moteur demandé au tracteur entraîne un très faible patinage de ses roues motrices. La nouvelle pression d'équilibre qui s'établit est celle pour laquelle le couple moteur - plus élevé - de la semi-remorque est suffisant pour que, compte tenu de la nouvelle répartition des efforts entre le tracteur et sa semi-remorque, le très faible patinage des roues du tracteur se stabilise.

Au cours du laps de temps $t_2 - t_3$, la pression redescend à la pression minimale $P_{appui}$, le véhicule rencontrant de nouveau des conditions de circulation normales, donc sans aucun patinage.

Au cours du laps de temps $t_3 - t_5$, la pression monte d'abord jusqu'en $t_4$, où la correction intervient avec un certain retard. Tant que la pression se situe au-dessus du seuil $P_{max}$ - $\Delta P$, le signal de correction de la cylindrée est envoyé en permanence au servomécanisme de commande de la cylindrée de la pompe, et la pression se maintient autour de la pression $P_{max}$, c'est-à-dire dans la zone où l'effort moteur assuré par la semi-remorque est maximum.

En $t_5$, le patinage des roues du tracteur est redescendu à un niveau tel que la pression dans le circuit descend en-dessous du seuil supérieur de correction, et le signal de correction cesse d'agir sur le servomécanisme de commande de la cylindrée, qui revient dans sa position de réglage prédéfinie au départ pour assurer la pression $P_{appui}$.

En $t_5$, commence un patinage des roues de la semi-remorque.

Dès que la pression tombe en dessous de $P_{appui}$, le signal de correction est fourni en permanence au servomécanisme de réglage de la cylindrée de la pompe pour augmenter sa cylindrée et faire remonter la pression jusqu'à ce qu'en $t_7$, la pression dépasse le seuil $P_{appui}$ + $\Delta P$, le signal de correction cessant alors d'agir, et le servomécanisme revenant dans son état initial prédéfini pour établir $P_{appui}$.

Comme on le voit en particulier à partir de la description qui précède, l'invention permet de bien utiliser la capacité de la semi-remorque à participer à l'effort moteur du véhicule, en lui faisant fournir un couple moteur directement fonction du patinage des roues du tracteur, et donc de la difficulté que rencontre le tracteur à assurer la propulsion du véhicule, et assurant également un effort moteur minimal de la part de la semi-remorque.

**Revendications**

1. Procédé de régulation du couple moteur transmis à la semi-remorque d'un véhicule dans lequel le moteur thermique du tracteur actionne d'une part les roues motrices du tracteur, par l'intermédiaire d'une boîte de vitesses et d'autre part, par l'intermédiaire d'une prise de force, une pompe hydraulique alimentant, par un circuit hydraulique, au moins un moteur hydraulique sur la semi-remorque, entraînant les roues motrices de la semi-remorque, la vitesse de rotation de la pompe hydraulique étant liée à la vitesse de rotation des roues du tracteur, et la vitesse de rotation du moteur hydraulique étant liée à la vitesse de rotation des roues de la semi-remorque, procédé dans lequel la régulation du couple s'obtient en agissant sur la cylindrée de la pompe et/ou du moteur hydraulique, caractérisé en ce qu'il consiste à
   - établir, dans le circuit hydraulique reliant le moteur à la pompe, entre l'entrée et la sortie de l'une au moins des machines hydrauliques (14, 16) (pompe ou moteur), un circuit de dérivation (122, 123) destiné à permettre un glissement entre la vitesse du moteur et la vitesse de la pompe,
   - constituer dans le circuit de dérivation une perte de charge (124, 125) telle qu'une variation du glissement, entraînant une variation du débit dérivé par ledit circuit de dérivation, s'accompagne d'une variation sensible de la pression du côté haute pression du circuit hydraulique,
   - déterminer le glissement entre la vitesse ($V_m$) du moteur et la vitesse ($V_p$) de la pompe, par rapport à une valeur de consigne, et simultanément
   - surveiller la pression du côté haute pression du circuit hydraulique et, lorsque la pression sort d'un intervalle prédéterminé,
   - agir sur la cylindrée de l'une au moins des machines (pompe ou moteur) hydrauliques, pour ramener le glissement vers zéro.

2. Procédé selon la revendication 1, caractérisé en ce qu'il consiste à déterminer le glissement par la différence ($k$ - $V_p/V_m$) entre une valeur prédéterminée ($k$) et la valeur instantanée ($V_p/V_m$) du rapport entre la vitesse de la pompe et la vitesse du moteur.

3. Procédé selon les revendications 1 et 2, caractérisé en ce qu'il consiste à agir sur la cylindrée de l'une des machines hydrauliques par un signal de correction proportionnel à ladite différence ($k$ - $V_p/V_m$) entre la valeur prédétermininée et la valeur actuelle du rapport des vitesses $V_p/V_m$.

4. Procédé selon la revendication 1, caractérisé en ce qu'il consiste de plus à définir, pour le côté haute pression du circuit pompe-moteur hydraulique, d'une part une pression maximale $P_{max}$ correspondant à l'effort moteur maximum souhaité sur la semi-remorque, et d'autre part une pression minimale $P_{appui}$ correspondant à l'effort moteur minimum souhaité sur la semi-remorque, et à définir ledit intervalle de pression prédéterminé, par l'intervalle de pression entre la pression $P_{max}$ et la pression $P_{appui}$.

5. Procédé selon la revendication 4, caractérisé en ce qu'il consiste de plus à mesurer la charge sur la semi-remorque et à définir $P_{max}$ en fonction de cette charge.

6. Procédé selon la revendication 1, caractérisé en ce que les circuits de fuite des machines et du circuit hydrauliques sont utilisées comme circuit de dérivation, et en ce que les pertes de charge dans ces circuits de fuite sont utilisées pour établir la relation voulue entre la pression et le débit dérivé, ou le glissement.

7. Procédé selon la revendication 6, caractérisé en ce qu'il consiste à suppléer les circuits de fuite par un vrai circuit de dérivation, présentant une perte de charge prédéterminée, pour établir la relation voulue entre la pression et le débit dérivé, ou le glissement.

8. Procédé selon l'une quelconque des revendications 1 à 7, caractérisé en ce qu'il consiste à faire varier la cylindrée de la pompe à cylindrée variable, la cylindrée du moteur étant maintenue constante.

9. Procédé selon l'une quelconque des revendications 1 à 7, caractérisé en ce qu'il consiste à faire varier la cylindrée du moteur à cylindrée variable, la cylindrée de la pompe étant maintenue constante.

10. Procédé selon l'une quelconque des revendications 1 à 7, caractérisé en ce qu'il consiste à faire varier en sens inverse la cylindrée de la pompe et celle du moteur.

11. Dispositif pour la mise en oeuvre du procédé selon l'une quelconque des revendications 1 à 10, comprenant

un tracteur possédant un moteur thermique pour entraîner les roues du tracteur, par l'intermédiaire d'une boîte de vitesses, et une pompe hydraulique par l'intermédiaire d'une prise de force;

une semi-remorque, reliée au tracteur, possédant au moins un moteur hydraulique relié à la pompe hydraulique par l'intermédiaire d'un circuit hydraulique, pour entraîner les roues de la semi-remorque; caractérisé en ce qu'il comprend de plus

un circuit de dérivation (122, 123) dans le circuit hydraulique, entre l'entrée et la sortie de l'une au moins des machines hydrauliques (14, 16) (pompe ou moteur), qui permet un glissement contrôlé par la pression, entre la vitesse du moteur hydraulique (16) et la vitesse de la pompe hydraulique (14);

un circuit de commande (110);

une première ligne (126) pour signaux, reliant la pompe (14) au circuit de commande (110) pour transmettre un signal ($V_p$) représentatif de la vitesse de rotation de la pompe;

une deuxième ligne (128) pour signaux, reliant la pompe au circuit de commande pour transmettre un signal (P) représentatif de la pression de sortie de la pompe;

une troisième ligne (129) pour signaux, reliant le moteur (16) hydraulique au circuit de commande (110) pour transmettre un signal ($V_M$) représentatif de la vitesse de rotation du moteur;

un ligne de sortie pour signaux (131), reliant le circuit de commande (110) à la pompe, pour transmettre un signal de commande de la capacité de la pompe;

dans lequel le circuit de commande (110) reçoit des signaux des lignes pour signaux, et produit un signal de commande de la capacité de la pompe, transmis par la ligne de sortie lorsque la pression de sortie de la pompe se situe en dehors d'un intervalle prédéterminé.

12. Dispositif pour la mise en oeuvre du procédé selon l'une quelconque des revendications 1 à 10, comprenant

un tracteur possédant un moteur thermique pour entraîner les roues du tracteur, par l'intermédiaire d'une boîte de vitesses, et une pompe hydraulique par l'intermédiaire d'une prise de force;

une semi-remorque, reliée au tracteur, possédant au moins un moteur hydraulique relié à la pompe hydraulique par l'intermédiaire d'un circuit hydraulique, pour entraîner les roues de la semi-remorque; caractérisé en ce qu'il comprend de plus

un circuit de dérivation (122, 123) dans le circuit hydraulique, entre l'entrée et la sortie de l'une au moins des machines hydrauliques (14, 16) (pompe ou moteur), qui permet un glissement contrôlé par la pression, entre la vitesse du moteur hydraulique (16) et la vitesse de la pompe hydraulique (14);

un circuit de commande (110);

une première ligne (126) pour signaux, reliant la pompe (14) au circuit de commande (110) pour transmettre un signal ($V_p$) représentatif de la vitesse de rotation de la pompe;

une deuxième ligne (128) pour signaux, reliant la pompe au circuit de commande pour transmettre un signal (P) représentatif de la pression de sortie de la pompe;

une troisième ligne (129) pour signaux, reliant le moteur (16) hydraulique au circuit de commande (110) pour transmettre un signal ($V_M$) représentatif de la vitesse de rotation du moteur;

une ligne de sortie pour signaux, reliant le circuit de commande (110) au moteur, pour transmettre un signal de commande de la capacité du moteur;

dans lequel le circuit de commande (110) reçoit des signaux des lignes pour signaux, et produit un signal de commande de la capacité du moteur, transmis par la ligne de sortie lorsque la pression de sortie de la pompe se situe en dehors d'un intervalle prédéterminé.

13. Dispositif selon l'une des revendications 11 et 12, caractérisé en ce qu'il comprend une quatrième ligne (130) pour signaux, reliant la semi-remorque (2) au circuit de commande (110), pour transmettre un signal représentatif de la charge de la semi-remorque.

14. Dispositif selon l'une des revendications 11 à 13, caractérisé en ce que le circuit de dérivation (122; 123) comprend un organe (124; 125) créant une perte de charge telle qu'une variation du débit passant par le circuit de dérivation s'accompagne d'une variation sensible de la pression du côté haute pression du circuit hydraulique.

15. Dispositif selon l'une quelconque des revendications 11 à 14, caractérisé en ce que le circuit de commande est relié par une ligne de sortie à la pompe et au moteur hydrauliques, et commande en sens inverse la capacité de la pompe et la capacité du moteur, lorsque la pression de sortie de la pompe se situe en dehors de l'intervalle prédéterminé.

**Patentansprüche**

1. Verfahren zur Regelung des auf den Anhänger eines Fahrzeuges übertragenen Drehmomentes, wobei der Verbrennungsmotor des Zugfahrzeugs einerseits die Antriebsräder des Zugfahrzeuges über ein Getriebe antreibt und andererseits über eine Kraftableitung eine Hydraulikpumpe antreibt, die über einen Hydraulikkreis wenigstens einen Hydraulikmotor am Anhänger speist und hierbei die Antriebsräder des Anhängers angetrieben werden, wobei die Rotationsgeschwindigkeit der Hydraulikpumpe mit der Rotationsgeschwindigkeit der Räder des Zugfahrzeugs gekoppelt ist, und die Rotationsgeschwindigkeit des Hydraulikmotors mit der Rotationsgeschwindigkeit der Räder des Anhängers gekoppelt ist, wobei die Drehmomentregelung durch Einwirkung auf das Fördervolumen der Hydraulikpumpe und/oder des Hydraulikmotors erhalten wird, gekennzeichnet durch
– Schaffen eines Bypasskreises (122, 123) zwischen dem Einlaß und dem Auslaß wenigstens einer der hydraulischen Maschinen (14, 16) (Pumpe oder Motor) in dem den Motor mit der Pumpe verbindenden Hydraulikkreis, wobei der Bypasskreis zur Zulassung eines Schlupfes zwischen der Motorgeschwindigkeit und der Pumpengeschwindigkeit ausgelegt ist,
– Erzeugen eines Druckabfalls (124, 125) in dem Bypasskreis, so daß eine Änderung des Schlupfes, der eine Durchflußänderung durch den Bypasskreis ergibt, einen erkennbaren Druckunterschied in der Druckseite des Hydraulikkreislaufes erzeugt,
– Bestimmen des Schlupfes zwischen der Geschwindigkeit ($V_m$) des Motors und der Geschwindigkeit ($V_p$) der Pumpe im Verhältnis zu einem Bezugswert und gleichzeitig
– Überprüfen des Druckes der Druckseite des Hydraulikkreislaufes und, wenn der Druck außerhalb eines vorbestimmten Intervalls liegt,
– Beeinflussen des Fördervolumens wenigstens einer der hydraulischen Maschinen (Pumpe oder Motor), um den Schlupf auf Null zu bringen.

2. Verfahren nach Anspruch 1, dadurch gekennzeichnet, daß es den Schritt enthält, den Schlupf durch die Differenz ($k - V_p/V_m$) zwischen einem vorbestimmten Wert ($k$) und dem tatsächlichen Wert ($V_p/V_m$) des Verhältnisses zwischen der Geschwindigkeit der Pumpe und der Geschwindigkeit des Motors zu bestimmen.

3. Verfahren nach Anspruch 1 und 2, dadurch gekennzeichnet, daß es eine Einwirkung auf das Fördervolumen einer der hydraulischen Maschinen durch ein Korrektursignal umfaßt, das proportional zu dem Unterschied ($k - V_p/V_m$) zwischen dem vorbestimmten Wert und dem tatsächlichen Wert des Geschwindigkeitsverhältnisses $V_p/V_m$ ist.

4. Verfahren nach Anspruch 1, dadurch gekennzeichnet, daß es weiterhin für die Druckseite des Pumpen-Motor-Hydraulikkreislaufes eine Bestimmung umfaßt, einerseits eines Maximaldruckes $P_{max}$, der der maximalen am Anhänger geforderten Antriebskraft entspricht und andererseits eines Minimaldruckes $P_{appui}$, der der minimalen am Anhänger geforderten Antriebskraft entspricht, sowie eine Bestimmung des vorbestimmten Druckintervalls durch das Druckintervall zwischen dem Druck $P_{max}$ und dem Druck $P_{appui}$.

5. Verfahren nach Anspruch 4, dadurch gekennzeichnet, daß es weiterhin eine Messung der Belastung am Anhänger umfaßt und eine Bestimmung von $P_{max}$ als eine Funktion der Belastung.

6. Verfahren nach Anspruch 1, dadurch gekennzeichnet, daß Abzweigleitungen der hydraulischen Maschinen und des Hydraulikkreislaufes als Bypasskreis verwendet werden und daß die Druckminderungen in diesen Abzweigleitungen zur Schaffung der gewünschten Relation zwischen dem Druck und dem Bypass-Durchfluß oder dem Schlupf benutzt werden.

7. Verfahren nach Anspruch 6, dadurch gekennzeichnet, daß es die Ergänzung der Abzweigleitungen durch einen tatsächlichen Bypasskreis enthält, der mit einem vorbestimmten Druckabfall die gewünschte Relation zwischen dem Druck und dem Bypass-Durchfluß oder dem Schlupf schafft.

8. Verfahren nach einem der Ansprüche 1 bis 7, dadurch gekennzeichnet, daß es die Einstellung des Fördervolumens der Pumpe mit variablem Fördervolumen umfaßt, während das Schluckvolumen des Motors konstant gehalten wird.

9. Verfahren nach einem der Ansprüche 1 bis 7, dadurch gekennzeichnet, daß es die Einstellung des Schluckvolumens des Motors mit variablem Schluckvolumen umfaßt, während das Fördervolumen der Pumpe konstant gehalten wird.

10. Verfahren nach einem der Ansprüche 1 bis 7, dadurch gekennzeichnet, daß es die Einstellung in entgegengesetzter Richtung des Fördervolumens der Pumpe und des Schluckvolumens des Motors umfaßt.

11. Vorrichtung zur Durchführung des Verfahrens nach einem der Ansprüche 1 bis 10, umfassend:

ein Zugfahrzeug, das einen Verbrennungsmotor zum Antrieb der Räder des Zugfahrzeuges über ein Getriebe und einer Hydraulikpumpe durch eine Kraftableitung aufweist;

einen Anhänger, der mit dem Zugfahrzeug verbunden ist und wenigstens einen Hydraulikmotor aufweist, der über einen Hydraulikkreislauf mit der Hydraulikpumpe verbunden ist, um die Räder des Anhängers anzutreiben;

dadurch gekennzeichnet, daß sie weiterhin beinhaltet:

einen Bypasskreis (122, 123) in dem Hydraulikkreislauf zwischen dem Einlaß und dem Auslaß wenigstens einer der hydraulischen Maschinen (14, 16) (Pumpe oder Motor), welcher einen druckgesteuerten Schlupf zwischen der Geschwindigkeit des Hydraulikmotors (16) und der Geschwindigkeit der Hydraulikpumpe (14) zuläßt;

ein Steuerteil (110);

eine erste Signalleitung (126), die die Pumpe (14) mit dem Steuerteil (110) zur Übertragung eines die Rotationsgeschwindigkeit der Pumpe repräsentierenden Signals ($V_p$) verbindet;

einer zweiten Signalleitung (128), die die Pumpe mit dem Steuerteil zur Übertragung eines den Ausgangsdruck der Pumpe repräsentierenden Signals (P) verbindet;

eine dritte Signalleitung (129), die den Hydraulikmotor (16) mit dem Steuerteil (110) zur Übertragung eines die Rotationsgeschwindigkeit des Motors repräsentierenden Signals ($V_m$) verbindet;

einer Ausgangssignalleitung (131), die das Steuerteil (110) mit der Pumpe zur Übertragung eines das Fördervolumen der Pumpe regelnden Signals verbindet;

wobei das Steuerteil (110) Signale von den Signalleitungen erhält und zur Regelung des Fördervolumens der Pumpe ein Signal erzeugt, das durch die Ausgangssignalleitung übertragen wird, wenn der Ausgangsdruck der Pumpe außerhalb eines vorbestimmten Intervalls liegt.

12. Vorrichtung zur Durchführung des Verfahrens nach einem der Ansprüche 1 bis 10, umfassend:

ein Zugfahrzeug, das einen Verbrennungsmotor zum Antrieb der Räder des Zugfahrzeuges über ein Getriebe und einer Hydraulikpumpe durch eine Kraftableitung aufweist;

einen Anhänger, der mit dem Zugfahrzeug verbunden ist und wenigstens einen Hydraulikmotor aufweist, der über einen Hydraulikkreislauf mit der Hydraulikpumpe verbunden ist, um die Räder des Anhängers anzutreiben;

dadurch gekennzeichnet, daß sie weiterhin beinhaltet:

einen Bypasskreis (122, 123) in dem Hydraulikkreislauf zwischen dem Einlaß und dem Auslaß wenigstens einer der hydraulischen Maschinen (14, 16) (Pumpe oder Motor), welcher einen druckgesteuerten Schlupf zwischen der Geschwindigkeit des Hydraulikmotors (16) und der Geschwindigkeit der Hydraulikpumpe (14) zuläßt;

ein Steuerteil (110);

eine erste Signalleitung (126), die die Pumpe (14) mit dem Steuerteil (110) zur Übertragung eines die Rotationsgeschwindigkeit der Pumpe repräsentierenden Signals ($V_p$) verbindet;

einer zweiten Signalleitung (128), die die Pumpe mit dem Steuerteil zur Übertragung eines den Ausgangsdruck der Pumpe repräsentierenden Signals (P) verbindet;

eine dritte Signalleitung (129), die den Hydraulikmotor (16) mit dem Steuerteil (110) zur Übertragung eines die Rotationsgeschwindigkeit des Motors repräsentierenden Signals ($V_m$) verbindet;

einer Ausgangssignalleitung, die das Steuerteil (110) mit dem Motor zur Übertragung eines das Schluckvolumen des Motors regelnden Signals verbindet;

wobei das Steuerteil (110) Signale von den Signalleitungen erhält und zur Regelung des Schluckvolumens des Motors ein Signal erzeugt, das durch die Ausgangssignalleitung übertragen wird, wenn der Ausgangsdruck der Pumpe außerhalb eines vorbestimmten Intervalls liegt.

13. Vorrichtung nach einem der Ansprüche 11 und 12, dadurch gekennzeichnet, daß sie eine vierte Signalleitung (130) enthält, die den Anhänger (2) mit dem Steuerteil (110) verbindet, um ein die Beladung des Anhängers repräsentierendes Signal zu übertragen.

14. Vorrichtung nach einem der Ansprüche 11 bis 13, dadurch gekennzeichnet, daß der Bypass-Kreis (122; 123) ein Bauteil (124; 125) enthält, das einen Druckabfall erzeugt, so daß eine Durchflußänderung durch den Bypass-Kreis einen erkennbaren Druckunterschied in der Druckseite des Hydraulikkreislaufes erzeugt.

15. Vorrichtung nach einem der Ansprüche 11 bis 14, dadurch gekennzeichnet, daß das Steuerteil durch eine Ausgangsleitung mit der Hydraulikpumpe und Motor verbunden ist und das Fördervolumen der Pumpe und das Schluckvolumen des Motors in entgegengesetzter Richtung regelt, wenn der Ausgangsdruck der Pumpe außerhalb des vorbestimmten Intervalls liegt.

## Claims

1. Process for controlling the torque transmitted to the trailer of a vehicle, in which the thermal motor of the tractor drives on one hand the driving wheels of the tractor, through a gear box, and on the other hand, through a power take-off, a hydraulic pump feeding, via a hydraulic circuit, at least one hydraulic motor on the trailer, driving the driving wheels of the trailer, the rotating speed of the hydraulic pump being bound to the rotational speed of the wheels of the tractor, and the rotational speed of the hydraulic motor being bound to the rotational speed of the wheels of the trailer, wherein the control on the torque is obtained by acting on the capacity of the hydraulic pump and/or motor, characterized in that it comprises
   – establishing, in the hydraulic circuit interconnecting the motor and the pump, between the input and the output of at least one of the hydraulic machines (14, 16) (motor or pump), a by-pass circuit (122, 123) adapted to allow a slipping between the speed of the motor and the speed of the pump,
   – generating in the by-pass circuit a pressure loss (124, 125) such that a variation of the speed slipping, resulting in a variation of the flow through said by-pass circuit, produces a perceptible pressure difference in the pressure side of the hydraulic circuit,
   – determining the slipping between the rotational speed ($V_m$) of the motor and the speed ($V_p$) of the pump, in relation to a reference value, and simultaneously
   – checking the pressure in the pressure side of the hydraulic circuit and, when said pressure goes outside a predetermined interval,
   – acting on the capacity of at least one of the hydraulic machines (pump or motor) to bring the slipping back to zero.

2. Process according to claim 1, characterized in that it comprises the step of determining the speed slipping by the difference ($k - V_p/V_m$) between a predermined value (k) and the actual value ($V_p/V_m$) of the ratio between the speed of the pump and the speed of the motor.

3. Process according to claims 1 and 2, characterized in that it comprises acting on the capacity of one of the hydraulic machines by a correction signal proportional to said difference ($k - V_p/V_m$) between the predetermined value and the actual value of the speed ratio $V_p/V_m$.

4. Process according to claim 1, characterized in that it further comprises defining, for the pressure side of the pump-motor hydraulic circuit, on one hand a maximum pressure $P_{max}$ corresponding to the maximum driving force required from the trailer, and on the other hand a minimum pressure $P_{appui}$ corresponding to the minimum driving force required from the trailer, and defining said predetermined pressure interval by the pressure interval between the pressure $P_{max}$ and the pressure $P_{appui}$.

5. Process according to claim 4, characterized in that it further comprises measuring the load on the trailer, and defining $P_{max}$ as a function of said load.

6. Process according to claim 1, characterized in that the leakage circuits of the machines and of the hydraulic circuit are used as by-pass circuit, and in that the pressure losses in these leakage circuits are used to establish the required relationship between the pressure and the flow through the by-pass, or the speed slipping.

7. Process according to claim 6, characterized in that it comprises supplementing the leakage circuits by a physical by-pass circuit, with a predetermined pressure loss, for establishing the required relationship between the pressure and the flow through the by-pass, or the speed slipping.

8. Process according to anyone of the claims 1 to 7, characterized in that it comprises adjusting the capacity of the pump with variable capacity, while maintaining constant the capacity of the motor.

9. Process according to anyone of the claims 1 to 7, characterized in that it comprises adjusting the capacity of the motor with variable capacity, while maintaining constant the capacity of the hydraulic pump.

10. Process according to anyone of the claims 1 to 7, characterized in that it comprises adjusting in opposite directions the capacity of the pump and the capacity of the motor.

11. Device for performing the process according to anyone of claims 1 to 10, comprising:
   a tractor having a thermal motor for driving the wheels of the tractor, through a gear box, and a hydraulic pump through a power take-off;
   a trailer connected to said tractor, having at least one hydraulic motor connected to said hydraulic pump through a hydraulic circuit, for driving the wheels of the trailer;
characterized in that it moreover comprises
   a bypass circuit (122, 123) in the hydraulic circuit, between the input and the output of at least one of the hydraulic machines (14, 16) (pump or motor), which allows a pressure-controlled slipping between the speed of the hydraulic motor (16) and the speed of the hydraulic pump (14);
   a control circuit (110);
   a first signal line (126) connecting said pump (14) with said control circuit (110) for carrying a signal ($V_p$) indicative of the rotational speed of the pump;
   a second signal line (128) connecting said pump and said control circuit for carrying a signal (P) indicative of the output pressure of the pump;

a third signal line (129) connecting said hydraulic motor (16) with said control circuit (110) for carrying a signal ($V_m$) indicative of the rotational speed of the motor;

an output signal line (131) connecting said control circuit (110) with said pump, for carrying a signal for controlling the capacity of the pump;

wherein said control circuit (110) receives signals from said signal lines, and produces a signal to control the capacity of said pump, carried by said output line when the output pressure from said pump lies outside a predetermined interval.

12. Device for performing the process according to anyone of claims 1 to 10, comprising:

a tractor having a thermal motor for driving the wheels of the tractor, through a gear box, and a hydraulic pump through a power take-off;

a trailer connected to said tractor, having at least one hydraulic motor connected to said hydraulic pump through a hydraulic circuit, for driving the wheels of the trailer;
characterized in that it moreover comprises

a bypass circuit (122, 123) in the hydraulic circuit, between the input and the output of at least one of the hydraulic machines (14, 16) (pump or motor), which allows a pressure-controlled slipping between the speed of the hydraulic motor ( 16 ) and the speed of the hydraulic pump (14);

a control circuit (110);

a first signal line (126) connecting said pump (14) with said control circuit (110) for carrying a signal ($V_p$) indicative of the rotational speed of the pump;

a second signal line (128) connecting said pump and said control circuit for carrying a signal (P) indicative of the output pressure of the pump;

a third signal line (129) connecting said hydraulic motor (16) with said control circuit (110) for carrying a signal ($V_m$) indicative of the rotational speed of the motor;

an output signal line connecting said control circuit (110) with said motor, for carrying a signal for controlling the capacity of the motor;

wherein said control circuit (110) receives signals from said signal lines, and produces a signal to control the capacity of said motor, carried by said output line when the output pressure from said pump lies outside a predetermined interval.

13. Device according to anyone of claims 11 and 12, characterised in that it comprises a fourth signal line (130), connecting the trailer (2) to the control circuit (110), for carrying a signal representative of the load on the trailer.

14. Device according to anyone of claims 11 to 13, characterized in that the by-pass circuit (122; 123) comprises a member (124; 125) generating a pressure loss such that a variation of the flow through the by-pass circuit produces a perceptible variation of the pressure in the pressure side of the hydraulic circuit.

15. Device according to anyone of claims 11 to 14, characterized in that the control circuit is connected through an output line to the hydraulic pump and motor, and control in opposite direction the capacity of the pump and the capacity of the motor, when the output pressure of the pump lies outside said predetermined interval.

FIG. 1

EP 0 424 392 B1

_FIG_.2

_FIG_.4

FIG. 3